# EUROPÄISCHE PATENTSCHRIFT

(11) **EP 1 807 270 B1**
(45) Veröffentlichungstag und Bekanntmachung des Hinweises auf die Patenterteilung: **22.10.2008**
(21) Anmeldenummer: 05811065.1
(22) Anmeldetag: 03.11.2005
(51) Int. Cl.: B60C 23/04, B60C 23/06

(54) **REIFENDRUCKKONTROLLSYSTEM FÜR EIN KRAFTFAHRZEUG**
TYRE PRESSURE CONTROL SYSTEM FOR A MOTOR VEHICLE
SYSTEME DE VERIFICATION DE PRESSION DE PNEUMATIQUES POUR VEHICULE AUTOMOBILE

(30) Priorität: 06.11.2004 DE 102004053696
(43) Veröffentlichungstag der Anmeldung: 18.07.2007
(73) Patentinhaber: Leopold Kostal GmbH & Co. KG, 58507 Lüdenscheid (DE)
(72) Erfinder: PRETZLAFF, Volker, 58093 Hagen (DE); VENS, Rainer, 48653 Coesfeld (DE); TOMBÜLT, Andreas, 44139 Dortmund (DE)
(86) Internationale Anmeldenummer: PCT/EP2005/011746
(87) Internationale Veröffentlichungsnummer: WO 2006/048271

(56) Entgegenhaltungen:
- EP-A- 1 052 119
- US-A1- 2003 090 372
- US-A1- 2004 066 290
- US-A1- 2004 164 854

## Beschreibung

Die vorliegende Erfindung betrifft ein Reifendruckkontrollsystem für ein Kraftfahrzeug gemäß des Oberbegriffs des Anspruchs 1.

Elektronische Systeme zur Reifendruckkontrolle finden in modernen Kraftfahrzeugen immer weitere Verbreitung. Hierzu wird jedem Radreifen im Kraftfahrzeug ein Reifendrucksensor zugeordnet, der seine Meßsignale drahtlos an eine Empfangseinrichtung sendet. Um den Aufwand gering zu halten, ist es zweckmäßig, wenn alle Reifendrucksensoren ihre Signale an eine einzige zentrale Empfangseinrichtung senden. Hierbei ergibt sich das Problem, daß die verschiedenen Signale von der Empfangseinheit den verschiedenen Rädern eindeutig zugeordnet werden müssen.

Ein Reifendruckkontrollsystem mit einem Verfahren zur Durchführung der Zuordnung von Reifendruckkontrollvorrichtungen zu Radpositionen ist aus der europäischen Patentanmeldung EP 1 052 119 A1 bekannt. Hierbei wird zu zwei verschiedenen Zeitpunkten jeweils ein über einen Zeitraum andauerndes Hochfrequenzsignal von einem Radsensormodul gesendet und von einem Empfänger in einem zentralen Steuergerät empfangen und das zugehörige Feldstärkesignal aufgezeichnet; signifikante Stellen des Signals beider aufgezeichneten Signalverläufe oder sogar der gesamte Signalverlauf werden miteinander verglichen, um die Stellen des gleichen Rotationswinkels des Rades festzustellen. Es wird dann das Zeitintervall zwischen den Stellen gemessen, an denen das Rad in den zwei Zeiträumen den offenbar gleichen Rotationswinkel einnimmt. Gleichzeit wird von zusätzlichen ortsfesten Drehzahlsensoren, die Umdrehungszahl jedes einzelnen Rades ermittelt. Die Zuordnung der Radsensormodule mit den Reifendrucksensoren zu den einzelnen Radpositionen erfolgt nach dem Kriterium, welches der Räder im ermittelten Zeitintervall eine ganzzahlige Anzahl von Radumdrehungen durchgeführt hat.

Nachteilig an einem solchen Reifendruckkontrollsystem ist, daß die Hochfrequenzsignale, aus denen das zentrale Steuergerät die Anbaupositionen der jeweiligen Radsensormodule bestimmt, durch die Radsensormodule ausgesandt werden, wodurch die internen Energiequellen der Radsensormodule relativ stark belastet werden. Dieser Initialisierungsvorgang muß zudem in regelmäßigen Abständen, etwa bei jedem Fahrzeugstart wiederholt werden. Radsensormodule weisen aber üblicherweise jeweils eigene Energiequellen mit einer begrenzten Kapazität auf, die zudem für die übliche Lebensdauer eines Radreifens, also für sieben bis zehn Jahre ausreichen soll.

Es stellte sich daher die Aufgabe, ein Reifendruckkontrollsystem zu schaffen, bei dem die Positionserkennung für die Radsensormodule auf eine möglichst energiesparende Weise erfolgt.

Diese Aufgabe wird erfindungsgemäß durch die kennzeichnenden Merkmale des Anspruchs 1 gelöst. Die Merkmale des Oberbegriffs des Anspruchs 1 sind von EP-A-1 052 119 bekannt.

Bei dem erfindungsgemäßen Reifendruckkontrollsystem sind sowohl das zentrale Steuergerät als auch die Radsensormodule als Hochfrequenz-Transceiver ausgeführt, also jeweils mit Sende- und Empfangseinrichtungen ausgestattet, wodurch zwischen den Radsensormodulen und dem zentralen Steuergerät bidirektional Signale ausgetauscht werden können.

Eine besonders energiesparende Zuordnung der Reifendrucksensoren zu den einzelnen Radpositionen wird dadurch erreicht, daß hierzu die Aussendung eines Hochfrequenzsignals nicht von den Radsensormodulen an das zentrale Steuergerät sondern umgekehrt vom zentralen Steuergerät an die Radsensoren erfolgt.

Dieses Hochfrequenzsignal erhält Markierungen mit der Periodizität entsprechend der Umdrehungszeit eines der Räder. Das markierte Hochfrequenzsignal wird von allen Radsensormodulen empfangen. Da die Empfangseinrichtungen in den Radsensormodulen relativ zur stationär im Kraftfahrzeug montierten Sendeantenne rotieren, weist der Feldstärkeverlauf der empfangenen Signale jeweils einen weiteren periodischen Anteil auf, der sich durch die Rotation des jeweiligen Rades ergibt. Durch Vergleich dieses periodischen Anteils mit den in den Hochfrequenzsignalen enthaltenen Markierungen kann jedes Radsensormodul erkennen, ob die Periodizität der empfangenen Markierungen der eigenen Umdrehungsgeschwindigkeit entsprechen. Ist dies der Fall, so sendet das Radsensormodul ein kurzes Bestätigungssignal an das zentrale Steuergerät, wodurch die Position des jeweiligen Radsensormoduls festgestellt ist.

Im folgenden soll die Erfindung anhand der Zeichnung näher erläutert werden, wobei neben dem prinzipiellen Aufbau eines Reifendruckkontrollsystems auch zwei mögliche Abläufe zur Zuordnung von Radpositionen beschrieben werden.

Es zeigen
- Figur 1: ein Kraftfahrzeug mit einem Reifendruckkontrollsystem,
- Figur 2: ein Radsensormodul,
- Figur 3 und 4: Feldstärkesignalverläufe der von den Radsensormodulen empfangenen Hochfrequenzsignale.

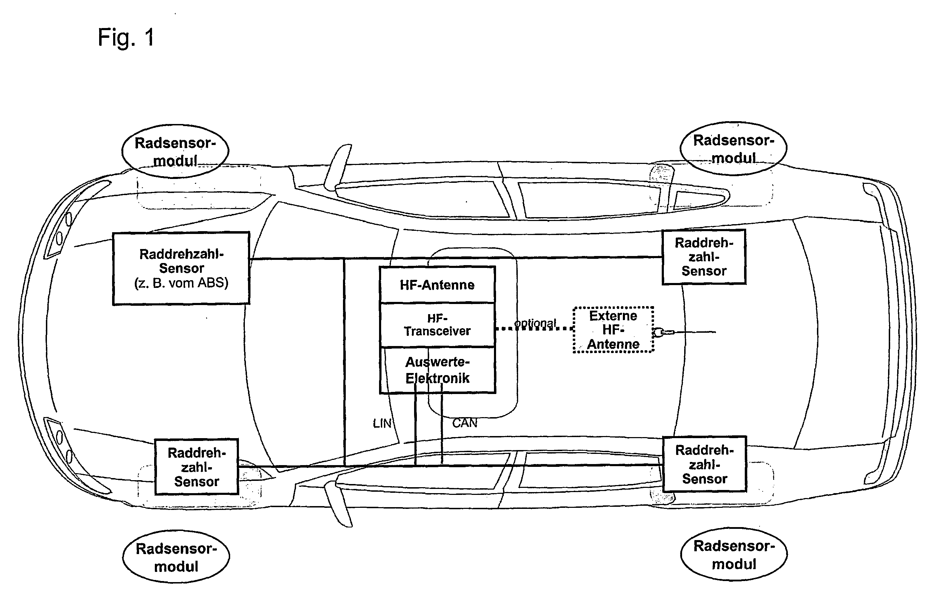

In der Figur 1 ist schematisch der Aufbau eines Kraftfahrzeugs mit einem Reifendruckkontrollsystem dargestellt. Zu dem Kraftfahrzeug gehört ein zentrales Steuergerät, welches neben einer Auswerteelektronik zumindest eine bidirektionale Funkeinrichtung, in der Zeichnung als HF-Transceiver bezeichnet, sowie eine interne und/oder externe HF-Antenne aufweist.

Des weiteren ist das zentrale Steuergerät zumindest mit einem Datenbussystem (LIN, CAN) des Kraftfahrzeugs verbunden, über das es Drehzahlsignale von jedem Fahrzeugrad zugeordneten Raddrehzahlsensoren erhält. Diese Raddrehzahlsensoren sind üblicherweise bereits für andere Fahrzeuganwendungen, wie beispielsweise für ein Antiblockierbremssystem, im Kraftfahrzeug vorhanden; die auf dem Datenbussystem vorliegenden Drehzahlsignale werden somit von dem erfindungsgemäßen Reifendruckkontrollsystem mitgenutzt.

In die vier Fahrzeugreifen ist jeweils ein Radsensormodul eingebaut. Im Gegensatz zu den vier Raddrehzahlsensoren, deren Signale den festen Sensoranbauorten im Kraftfahrzeug genau zugeordnet werden können, ist die Zuordnung der Signale der Radsensormodule, und damit auch der von diesen erfaßten Reifendrucksignale, zu bestimmten Radpositionen nicht ohne weiteres möglich, insbesondere da sich durch Reifentausch die Zuordnung jederzeit ändern kann.

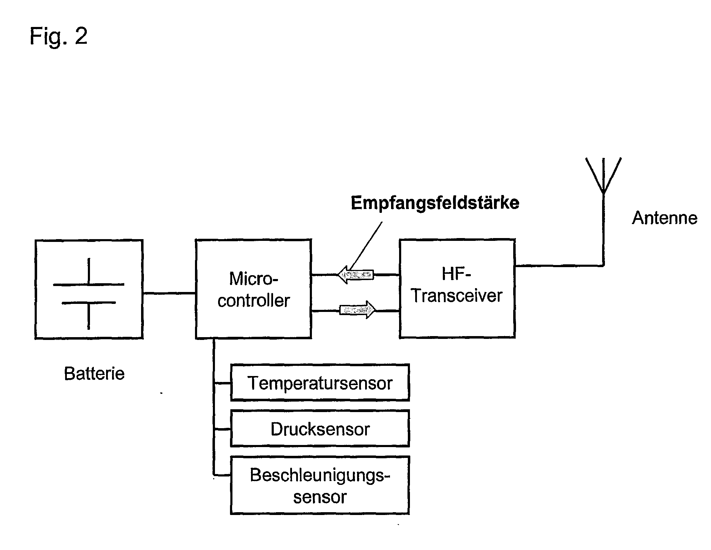

Daher ist die Zuordnung zwischen den individuellen Radsensormodulen und deren Anbauorten regelmäßig, also etwa bei jedem Fahrzeugstart, auf Anforderung per Knopfdruck, über Bordcomputer o. ä., zu überprüfen bzw. neu vorzunehmen.
Der Aufbau eines Radsensormoduls ist anhand eines Blockschaltbilds in der Figur 2 verdeutlicht. Das Radsensormodul, welches im Inneren eines Reifens angeordnet ist, besteht aus einer Batterie, die beispielsweise als kleinbauende Knopfzelle ausgeführt sein kann, und die die weiteren Komponenten des Radsensormoduls mit elektrischer Energie versorgt. Die Stromaufnahme dieser Komponenten soll dabei so gering wie möglich sein, da ein Wechsel der Batterie während der gesamten Lebensdauer des Reifens, also für mindestens sieben Jahre, üblicherweise nicht vorgesehen ist.

Das Radsensormodul besitzt des weiteren wenigstens einen Microcontroller, der die Signale wenigstens eines Drucksensors zur Ermittlung des Reifendrucks auswertet. Vorteilhaft kann das Radsensormodul auch weitere Sensoren aufweisen, beispielsweise einen Sensor zur Messung der Reifentemperatur und/oder einen Beschleunigungssensor.

Der Microcontroller ist mit einer bidirektionalen Sende- und Empfangseinrichtung verbunden, in der Figur als HF-Transceiver bezeichnet, welche mit der ebenfalls bidirektionalen Sende- und Empfangseinrichtung des zentralen Steuergeräts kommunizieren kann.

Eine mit dem HF-Transceiver verbundene Antenne dient hierzu sowohl als Sende- wie auch als Empfangsantenne.

Da die Radsensormodule mit den Reifen verbunden sind und daher auch deren Drehbewegung relativ zur Karosserie des Kraftfahrzeugs mitmachen, wechseln mit der Raddrehung auch die Empfangsbedingungen der Antenne des Radsensormoduls.

So wird, bedingt durch den wechselnden Abstand der Antenne des Radsensormoduls zur Sendeantenne, die wechselnde Polarisationsrichtung der HF-Signale relativ zur Lage der Empfangsantenne und die wechselnde Abschattung durch andere Fahrzeugkomponenten, ein mit konstanter Sendefeldstärke vom zentralen Steuergerät ausgesandtes HF-Signal aufgrund der mit dem Fahrzeugrad rotierenden Antenne nicht zu einer konstanten Empfangsfeldstärke an den Radsensormodulen führen, sondern zu einem mit der Raddrehung periodischen Feldstärkesignal mit einem über die Periodendauer variierenden Verlauf.

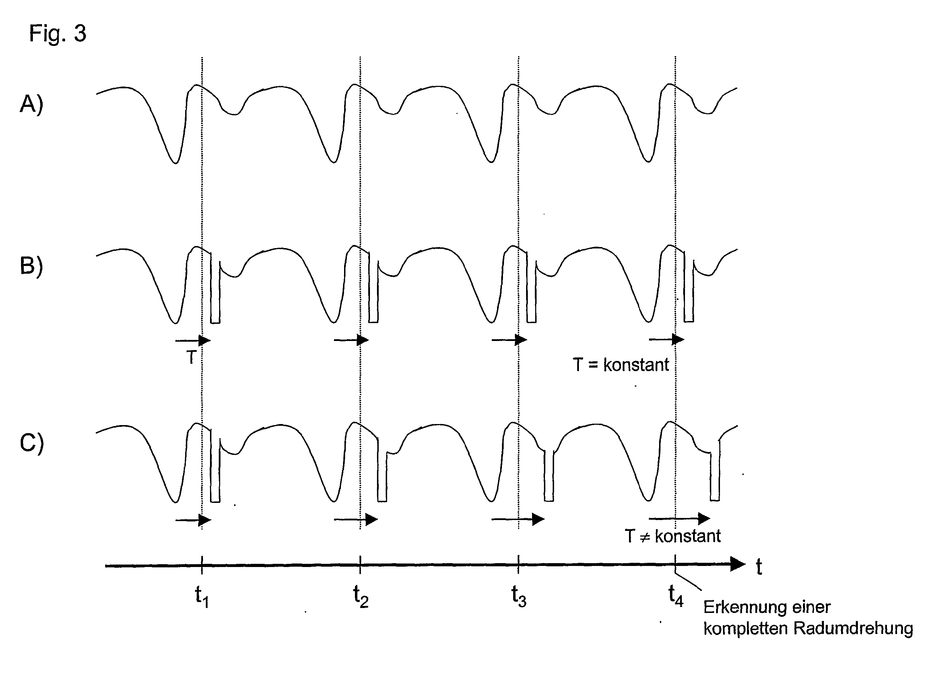

Ein typischer Signalverlauf, wie er vom HF-Transceiver an den Microcontroller zur Auswertung gegeben wird, ist in der Figur 3 im Plot A) dargestellt. Anhand der Figur 3 kann des weiteren der Ablauf zur Zuordnung von Radsensormodulen zu Radpositionen im Kraftfahrzeug verdeutlicht werden. Hierzu wird die Tatsache ausgenutzt, daß die Radumdrehungszahlen der Räder an den einzelnen Radpositionen, abhängig von verschiedenen Einflußgrößen wie Reifenumfang, Reifendruck, Kurvenfahrt o. ä. unterschiedlich sind.

Zur Positionsbestimmung eines Radsensormoduls wertet das zentrale Steuergerät die Radrehzahlsignale eines (an einer bekannten Position befindlichen) Raddrehzahlsensors aus und unterbricht die Aussendung eines ansonsten konstanten HF-Signals jeweils nach einer vollen Radumdrehung für einen, verglichen mit der Umdrehungszeit des Rades, kurzen Zeitraum.

Die von einem Radsensormodul empfangene Feldstärke entspricht dadurch einem Verlauf wie er im Plot B oder C der Figur 3 dargestellt ist. Durch die Signalunterbrechungen des Sendesignals kommt es zu charakteristischen rechteckförmigen Einbrüchen im Verlauf der von einem Radsensormodul empfangenen Signalfeldstärke. Der Microcontroller wertet nun den zeitlichen Abstand zwischen diesen Einbrüchen in der Empfangsfeldstärke zu anderen charakteristischen Stellen des Feldstärkeverlaufs, vorzugsweise zu Extremstellen der Feldstärkekurve aus.

Bleibt nun der zeitliche Abstand zwischen beispielsweise dem Minimumwert des Feldstärkeverlaufs und der Feldstärkeunterbrechung über mehrere Radumdrehungen konstant, wie dies der Plot B) zeigt, so gehören die vom zentralen Steuergerät aufmodulierten Raddrehzahlimpulse zu dem den Signalverlauf auswertenden Radsensormodul.

Im Gegensatz dazu verändert sich an den anderen Radsensormodulen, wie im Plot C) dargestellt, der zeitliche Abstand zwischen den markanten Stellen im Verlauf der Empfangsfeldstärke mit zunehmender Anzahl von Radumdrehungen.

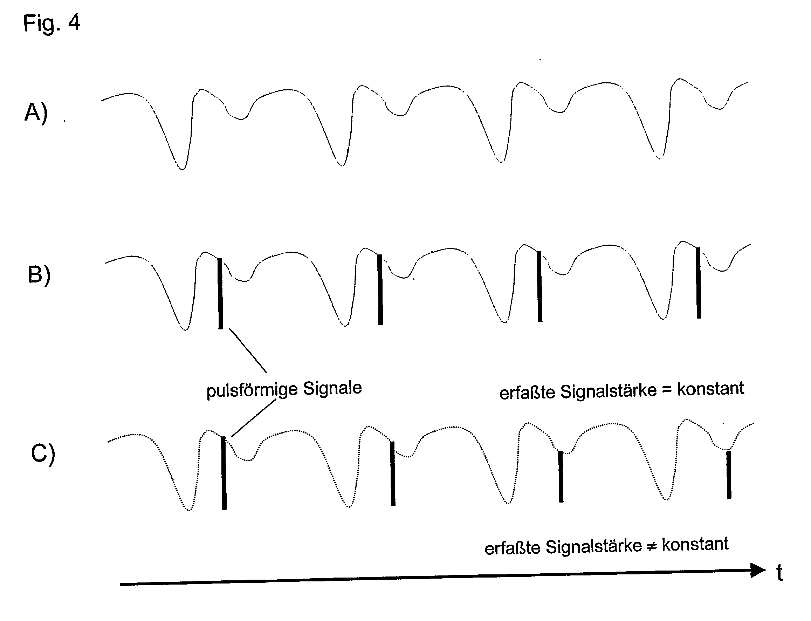

Ein weiteres mögliches Auswerteverfahren ist in der Figur 4 skizziert. Plot A zeigt wiederum den Feldstärkeverlauf, wie er von den Radsensormodulen bei einem vom zentralen Steuergerät ausgesandten konstanten HF-Signal registriert würde. Das zentrale Steuergerät sendet aber nun kein zeitlich andauerndes konstantes Signal, sondern jeweils nur ein kurzeitiges konstantes Signal und zwar jeweils nach einer Radumdrehung eines vom Steuergerät ausgewählten Rades.

Jedes Radsensormodul registriert nun ein pulsförmiges Signal, dessen Empfangsfeldstärke von der jeweiligen momentanen Radposition zum Empfangszeitpunkt abhängt. Bei dem zum ausgesandten Raddrehzahlsignal gehörenden Rad ist die rotationsbedingte Feldstärkevariation synchron zum Raddrehzahlsignal, so daß die nach jeweils einer Radumdrehung eintreffenden Impulse immer auf die gleiche Phase des Feldstärkeverlaufs treffen und mithin ein konstantes Feldstärkesignal liefern.

Stellt somit der Microcontroller fest, daß aufeinanderfolgende Feldstärkesignale immer den gleichen Signalwert aufweisen (Plot B), so meldet er dem zentralen Steuergerät, daß sein eigenes Radsensormodul an der Position des Rades sitzt, dessen Raddrehsignale momentan übertragen werden. An allen anderen Radsensormodulen variiert der Feldstärkesignalwert mit den Radumdrehungen (Plot C).

Als weitere alternative Auswertemethode kann auch vorgesehen werden, daß bei Eintreffen eines pulsförmigen Signals vom zentralen Steuergerät alle Radsensormodule den Wert der empfangen Signalfeldstärke an das Steuergerät zurückmelden. Das Steuergerät stellt so nach mehreren ausgesandten Impulsen fest, bei welchem Radsensormodul die Empfangsfeldstärke über mehrere Radumdrehungen konstant bleibt, und hat damit das zugehörige Radsensormodul ermittelt.

## Patentansprüche

1. Reifendruckkontrollsystem für ein Kraftfahrzeug
- mit jeweils einem jeden Rad zugeordneten Reifendrucksensormodul und
- mit jeweils einer jedem Rad zugeordneten Einrichtung, die ein dem jeweiligen Reifendruck entsprechendes Signal an eine im Kraftfahrzeug stationäre Empfangseinrichtung sendet,
- mit einem im Kraftfahrzeug stationär angeordneten zentralen Steuergerät, welches die dem jeweiligen Reifendruck entsprechenden Signale empfängt und auswertet,
- und welches zusätzlich die Signale von jedem drehenden Rad zugeordneter, ortsfest am Kraftfahrzeug angeordneter Drehzahlsensoren zugeführt erhält,
- wobei das Steuergerät aus den Signalen der Reifendrucksensormodule und den Signalen der Drehzahlsensoren die Anbaupositionen der Reifendrucksensormodule bestimmt,
- wobei sowohl die Reifendrucksensormodule als auch das zentrale Steuergerät Sende- und Empfangseinrichtungen zum gegenseitigen Datenaustausch aufweisen,
**dadurch gekennzeichnet,**
- **daß** das zentrale Steuergerät ein mit der Periodizität von Raddrehzahlsignalen markiertes Signal an die Empfangseinrichtungen der Reifendrucksensormodule sendet und
- **daß** die Reifendrucksensormodule die Empfangsfeldstärke des vom zentralen Steuergerät ausgesendeten Signals auswerten, indem sie den aufgrund der Raddrehung zeitlich variierenden Verlauf der Empfangsfeldstärke mit der Periodenzeit der im Empfangssignal enthaltenen Markierungen in Beziehung setzen.

2. Reifendruckkontrollsystem nach Anspruch 1, **dadurch gekennzeichnet, daß** das zentrale Steuergerät zur Generierung des periodisch markierten Signals das Sendesignal mit der zeitlichen Periode jeweils eines Raddrehzahlsensors kurzzeitig moduliert.

3. Reifendruckkontrollsystem nach Anspruch 2, **dadurch gekennzeichnet, daß** das zentrale Steuergerät zur Generierung des periodisch markierten Signals ein Sendesignal mit der zeitlichen Periode jeweils eines Raddrehzahlsensors jeweils kurzzeitig aussendet oder ein Sendesignal mit einem ansonsten konstanten Sendesignalpegel jeweils kurzzeitig unterbricht.

4. Reifendruckkontrollsystem nach Anspruch 1, **dadurch gekennzeichnet, daß** die Reifendrucksensormodule eine Übereinstimmung zwischen der Periodizität der vom zentralen Steuergerät übertragenen Signale mit der Periodizität der Variation der Empfangsfeldstärke innerhalb der Reifendrucksensormodule erkennen und mittels eines Funksignal an das zentrale Steuergerät melden.

5. Reifendruckkontrollsystem nach Anspruch 2, **dadurch gekennzeichnet, daß** das zentrale Steuergerät ein konstantes Sendesignal aussendet, welches nach jeweils einer, aus den Raddrehzahlsignalen ermittelten vollständigen Umdrehung eines Rades kurzzeitig unterbrochen wird, und daß jedes Reifendrucksensormodul den zeitlichen Abstand der so erzeugten Austastlücke im Empfangssignal zu einem charakteristischen Wert, vorzugsweise einem Extremwert, im Verlauf des Empfangsfeldstärkesignals auf zeitliche Konstanz überwacht.

6. Reifendruckkontrollsystem nach Anspruch 2, **dadurch gekennzeichnet, daß** das zentrale Steuergerät zu den Zeiten einer aus den Raddrehzahlsignalen ermittelten vollständigen Umdrehung eines Rades ein kurzzeitig andauerndes Sendesignal aussendet und die Reifendrucksensormodule jeweils beim Empfang des Sendesignals den Wert des jeweiligen Empfangsfeldstärkesignals bestimmen und mehrere aufeinanderfolgende Empfangsfeldstärkesignale auf ihre Amplitudenkonstanz überprüfen.

7. Reifendruckkontrollsystem nach Anspruch 1, **dadurch gekennzeichnet, daß** das zentrale Steuergerät zu den Zeiten einer aus den Raddrehzahlsignalen ermittelten vollständigen Umdrehung eines Rades ein kurzzeitig andauerndes Sendesignal aussendet und die Reifendrucksensormodule jeweils beim Empfang des Sendesignals den Wert des jeweiligen Empfangsfeldstärkesignals bestimmen und an das zentrale Steuergerät übertragen und daß das zentrale Steuergerät mehrere aufeinanderfolgende Empfangsfeldstärkesignale auf ihre Amplitudenkonstanz überprüft.

8. Reifendruckkontrollsystem nach Anspruch 2, **dadurch gekennzeichnet, daß** das zentrale Steuergerät zu den Zeiten einer aus den Raddrehzahlsignalen ermittelten vollständigen Umdrehung eines Rades eine kurzzeitige Umtastung der Frequenz oder der Phase des Sendesignal ausführt und die Reifendrucksensormodule jeweils beim Empfang des Sendesignals den Wert der Frequenz oder der Phase des Empfangssignals bestimmen und daß jedes Reifendrucksensormodul den zeitlichen Abstand der so erzeugten Austastlücke im Empfangssignal zu einem charakteristischen Wert, vorzugsweise einem Extremwert, im Verlauf des Empfangsfeldstärkesignals auf zeitliche Konstanz überwacht.

## Claims

1. Tyre pressure monitoring system for a motor vehicle
- with an individual type pressure sensor module allocated to each wheel, and
- with a facility allocated to each individual wheel which transmits a signal corresponding to the respective tyre pressure to a receiving device which is permanently installed in the motor vehicle,
- with a central control unit which is permanently located in the motor vehicle and which receives and evaluates the signals corresponding to the respective tyre pressure,
- and which additionally receives the signals forwarded by each speed sensor arranged in a fixed position on the motor vehicle and allocated to each rotating wheel,
- for which purpose the control unit determines the mounting positions of the tyre pressure sensor modules based on the signals from the tyre pressure sensor modules and the signals from the speed sensors,
- whereby both the tyre pressure sensor modules and the central control unit feature transmission and receiving devices for the purpose of communicating data,
**characterised by the fact**
- that the central control unit transmits a signal marked with the periodicity of wheel speed signals to the receiving devices of the tyre pressure sensor modules, and
- that the tyre pressure sensor modules evaluate the received field strength of the signal emitted by the central control unit by correlating the characteristic of the received field strength - which varies as regards time due to the rotation of the wheel - to the periodic time of the markings incorporated in the received signal.

2. Tyre pressure monitoring system in accordance with Claim 1, **characterised by** the fact that the central control unit momentarily modulates the transmission signal with the time-related period of each individual wheel speed sensor for the purpose of generating the periodically marked signal.

3. Tyre pressure monitoring system in accordance with Claim 2, **characterised by** the fact that the central control unit momentarily emits a transmission signal with the time-related period of each individual speed sensor, or momentarily interrupts a transmission signal with an otherwise constant transmission signal level, as the case may be, for the purpose of generating the periodically marked signal.

4. Tyre pressure monitoring system in accordance with Claim 1, **characterised by** the fact that the tyre pressure sensor modules recognise a conformance of the periodicity of the signals transmitted by the central control unit and the periodicity of the variation of the received field strength within the tyre pressure sensor modules and signal this to the central control unit by means of a radio signal.

5. Tyre pressure monitoring system in accordance with Claim 2, **characterised by** the fact that the central control unit emits a constant transmission signal which is momentarily interrupted following each complete revolution of a wheel calculated from the wheel speed signals, and that in the waveform of the received field strength signal each tyre pressure sensor module monitors the time interval of the so generated blanking gap in the received signal in relation to a characteristic value, preferably an extreme value, for its time constancy.

6. Tyre pressure monitoring system in accordance with Claim 2, **characterised by** the fact that the central control unit emits a transmission signal of short duration at the times of completing a revolution of a wheel calculated from the wheel speed signals and, upon receipt of each transmission signal, the tyre pressure sensor modules determines the value of each received field strength signal and checks several consecutive received field strength signals for their amplitude constancy.

7. Tyre pressure monitoring system in accordance with Claim 1, **characterised by** the fact that the central control unit emits a transmission signal of short duration at the times of completing a revolution of a wheel calculated from the wheel speed signals and, upon receipt of each transmission signal, the tyre pressure sensor modules determines the value of each received field strength signal and transmits the same to the central control unit, and that the central control unit checks several consecutive received field strength signals for their amplitude constancy.

8. Tyre pressure monitoring system in accordance with Claim 2, **characterised by** the fact that the central control unit conducts a momentary shift keying of the frequency or of the phase of the transmission signal at the times of completing a revolution of a wheel calculated from the wheel speed signals, and the tyre pressure sensor modules calculate the value of the frequency or the phase of the received signal upon receipt of the transmission signal in each case, and that in the waveform of the received field strength signal each tyre pressure sensor module monitors the time interval of the so generated blanking gap in the received signal in relation to a characteristic value, preferably an extreme value, for its time constancy.

## Revendications

1. Système de contrôle de pression de pneu pour un véhicule automobile
- avec un module de détection de pression de pneu, associé à chacune des roues, et
- avec un dispositif associé à chacune des roues, qui envoie, à un dispositif récepteur installé fixement dans le véhicule automobile, un signal correspondant à la pression de pneu respective,
- avec un appareil de commande central, installé fixement dans le véhicule automobile, qui reçoit et exploite les signaux correspondant à la pression de pneu respective,
- et qui, en plus, reçoit les signaux de détecteurs de vitesse de rotation associés à chaque roue en rotation et installés fixement sur le véhicule automobile,
- l'appareil de commande déterminant, à partir des signaux des modules de détection de pression de pneu et des signaux des détecteurs de vitesse de rotation, les positions de montage des modules de détection de la pression de pneu,
- aussi bien les modules de détection de pression de pneu que le dispositif de commande central présentant des dispositifs d'émission et de réception pour un échange de données réciproque,
**caractérisé en ce que**
- l'appareil de commande central émet, à destination des dispositifs récepteurs des modules de détection de pression de pneu, un signal marqué par la périodicité de signaux de vitesse de rotation de roue, et
- **en ce que** les modules de détection de pression de pneu évaluent l'intensité de champ à la réception du signal émit par l'appareil de commande central, en établissant la relation entre l'évolution de l'intensité de champ à la réception, qui varie dans le temps en fonction de la rotation de roue, et le temps périodique des marques contenues dans le signal reçu.

2. Système de contrôle de la pression de pneu selon la revendication 1, **caractérisé en ce que** l'appareil de commande central, pour générer le signal périodiquement marqué, module brièvement le signal d'émission avec la période de chacun des détecteurs de vitesse de rotation de roue.

3. Système de contrôle de la pression de pneu selon la revendication 2, **caractérisé en ce que** l'appareil de commande central, pour générer le signal périodiquement marqué, lance brièvement un signal d'émission avec la période temporelle de chaque détecteur de vitesse de rotation de roue ou interrompt brièvement un signal d'émission avec un niveau de signal d'émission sinon constant.

4. Système de contrôle de la pression de pneu selon la revendication 1, **caractérisé en ce que** les modules de détection de pression de roues reconnaissent une concordance entre la périodicité des signaux transmis par l'appareil de commande central et la périodicité de la variation de l'intensité de champ à la réception à l'intérieur des modules de détection de pression de pneu et la signale à l'appareil de commande central au moyen d'un signal radio.

5. Système de contrôle de la pression de pneu selon la revendication 2, **caractérisé en ce que** l'appareil de commande central émet un signal d'émission constant, qui est interrompu brièvement, chaque fois après une rotation complète d'une roue, déterminée à partir de signaux de vitesses de rotation de roues, et que chaque module de détection de pression de pneu contrôle, quant à sa constance dans le temps, l'intervalle de temps de la lacune d'interruption ainsi généré dans le signal de réception, par rapport à une valeur caractéristique, de préférence à une valeur extrême, au cours de l'évolution du signal d'intensité de champ à la réception.

6. Système de contrôle de la pression de pneu selon la revendication 2, **caractérisé en ce que** l'appareil de commande central émet un signal d'émission de courte durée aux moments d'une rotation complète d'une roue, détectée à partir des signaux de vitesse de rotation d'une roue, et que les modules de détection de pression de pneu déterminent chacun, lors de la réception du signal d'émission, la valeur du signal d'intensité de champ à la réception respectif, et vérifient plusieurs signaux d'intensité de champ à la réception successifs, en ce qui concerne leur constance d'amplitude.

7. Système de contrôle de la pression de pneu selon la revendication 1, **caractérisé en ce que** l'appareil de commande central émet un signal d'émission de courte durée aux moments d'une rotation complète d'une roue, détectée à partir des signaux de vitesse de rotation d'une roue, et que les modules de détection de pression de pneu déterminent chacun, lors de la réception du signal d'émission, la valeur du signal d'intensité de champ à la réception respectif et la transmettent à l'appareil de commande central, et que l'appareil de commande central vérifie plusieurs signaux d'intensité de champ à la réception successifs, en ce qui concerne leur constance d'amplitude.

8. Système de contrôle de la pression de pneu selon la revendication 2, **caractérisé en ce que** l'appareil de commande central exécute, aux moments d'une rotation complète d'une roue, détectée à partir des signaux de vitesse de rotation d'une roue, une brève modulation de la fréquence ou de la phase du signal d'émission, et que les modules de détection depression de pneu déterminent respectivement, lors de la réception du signal d'émission, la valeur de la fréquence ou de la phase du signal d'émission, et que chaque module de détection de pression de pneu contrôle, quant à sa constance dans le temps, l'intervalle dans le temps de la lacune ainsi généré dans le signal de réception par rapport à une valeur caractéristique, de préférence à une valeur extrême, au cours de l'évolution du signal d'intensité de champ à la réception.
